Europäisches Patentamt

(19) **European Patent Office**

**Office européen des brevets**

(11) Numéro de publication: **0 029 788**

**A1**

(12) # DEMANDE DE BREVET EUROPEEN

(21) Numéro de dépôt: **80401674.9**

(51) Int. Cl.³: **H 01 M 4/21**

(22) Date de dépôt: **21.11.80**

(30) Priorité: **23.11.79 IT 2752779**

(43) Date de publication de la demande:
**03.06.81 Bulletin 81/22**

(84) Etats Contractants Désignés:
**DE FR GB**

(71) Demandeur: **Société dite : FABBRICA ITALIANA MAGNETI MARELLI S.p.A.**
**Via Guastalla, 2**
**Milano(IT)**

(72) Inventeur: **Clerici, Guido**
**Via G.B. Morgagni, 13**
**Milano(IT)**

(74) Mandataire: **Nony, Michel**
**Cabinet Nony 29, Rue Cambacérès**
**F-75008 Paris(FR)**

(54) **Procédé de production en continu de plaques pour batteries d'accumulateurs au plomb, et batteries d'accumulateurs dotées de telles plaques.**

(57) Ce procédé qui utilise un ruban continu grillagé en alliage de plomb (1), enduit de matière active, recouvert sur les deux côtés par des couches de protection (3, 6) et compacté à l'aide de rouleaux (8 et 9), consiste à découper en plaques ledit ruban (1') et à soumettre les plaques découpées (10) à un processus thermique de conditionnement (ou stabilisation) dans un four (D) ou dans un autoclave, de manière à conférer auxdites plaques des caractéristiques appropriées à leur utilisation finale.

Un second perfectionnement consiste à protéger le ruban enduit avec une couche de matière non désintégrable dans l'acide.

Un autre perfectionnement consiste enfin à enrouler en rouleaux (13) le ruban enduit et protégé (1') de manière à en faciliter les opérations de conditionnement, de stockage et de transport avant le découpage en plaques.

./...

Fig.1

Procédé de production en continu de plaques pour batteries
d'accumulateurs au plomb, et batteries d'accumulateurs
dotées de telles plaques.

L'invention a pour objet un procédé de production en continu
de plaques pour batteries d'accumulateurs au plomb, ainsi
que des batteries d'accumulateurs dotées de telles plaques.

La présente invention concerne en particulier des perfectionnements au procédé de production en continu de plaques d'accumulateurs au plomb, utilisant un ruban continu en alliage
de plomb grillagé, destiné à être enduit de matière active,
puis recouvert sur les deux côtés par des couches de protection et enfin compacté au moyen de rouleaux.

Les couches de protection ont le rôle principal de retenir
la matière active à l'état mou et pâteux dans les alvéoles
formées par la grille du ruban et d'empêcher les particules
d'oxyde et les poussières de se décoller de la matière
active sèche, ce qui risquerait de polluer le milieu, et en
évitant tout contact direct de l'opérateur lors de la manipulation des plaques.

Les plaques obtenues avec les procédés connus présentent cependant des caractéristiques définies d'une manière imprécise ce qui se traduit par une fiabilité qualitative plutôt
médiocre.

D'autre part, les couches de protection appliquées sous
forme de rubans sont à base de fibres cellulosiques, de
telle sorte qu'au contact avec l'électrolyte elles se désintègrent en donnant lieu parfois à des substances polluantes.

Le but principal de la présente invention est celui d'obtenir des plaques (ou électrodes) enduites et protégées pour
batteries d'accumulateurs présentant des caractéristiques
qui puissent correspondre à l'utilisation finale à laquelle elles sont destinées, c'est-à-dire avec des caractéristiques appropriées suivant qu'elles seront destinées à des batteries de démarrage ou à des batteries industrielles.

Un autre but de l'invention est celui d'obtenir des plaques enduites et protégées en mesure de ne pas provoquer la pollution de l'électrolyte afin de n'être soumises à aucune action corrosive.

Un autre but encore de l'invention est celui de faciliter les opérations successives, jusqu'à un éventuel stockage et expédition du ruban continu enduit et protégé.

Selon l'invention, pour obtenir des plaques dotées de caractéristiques appropriées le ruban continu, enduit, protégé et compacté est convenablement découpé et les plaques ainsi obtenues sont soumises à un processus thermique de conditionnement (stabilisation) en atmosphère contrôlée.

Afin d'augmenter la longévité des plaques, les couches de protection sont constituées, tout au moins pour les plaques positives, par des bandes de matière perméable à l'électrolyte, dotée d'une faible résistance chimique et résistant à l'oxydation électro-chimique en milieu acide, comme par exemple des bandes poreuses en matière plastique tissée ou non tissée.

Toujours selon l'invention, pour faciliter les opérations successives ainsi que le stockage et le transport du ruban ainsi constitué, quel que soit le matériau qui constitue la couche de protection, celui-ci est enroulé en bobines que l'on soumet ensuite à un processus de conditionnement avant le découpage des plaques.

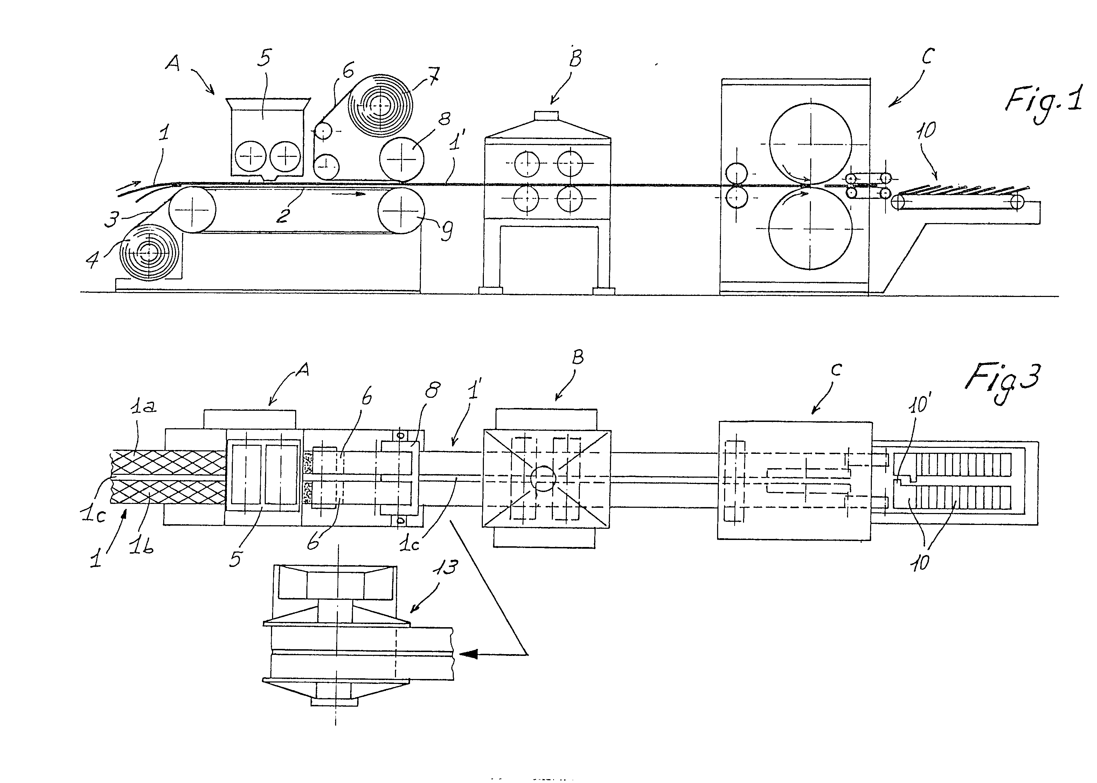

D'autres particularités et caractéristiques du procédé, perfectionné conformément à l'invention, ressortiront plus clairement de la description qui va suivre de l'appareillage pour la production continue des plaques, illustré d'une manière schématique et à titre d'exemple sur les dessins annexés, les figures 1 et 2 étant des vues latérales de l'appareillage et les figures 3 et 4 des vues en plan de ce même appareillage.

Conformément aux figures, la référence 1 indique un ruban d'alliage de plomb grillagé, provenant depuis une production continue ou depuis un rouleau d'alimentation, non représentés.

A titre d'exemple, le ruban comprend deux bandes latérales à grille 1a et 1b et une bande intermédiaire pleine 1c de largeur réduite.

Comme cela sera expliqué plus en détail par la suite, le ruban 1 est soumis en continu à une enduction de matière active, à l'application des couches de protection et au compactage dans la machine A, au séchage superficiel dans le four B, au découpage en plaques dans la machine C et enfin au processus de conditionnement ou stabilisation dans la chambre C.

La machine A comprend un support mobile constitué par une bande transporteuse motorisée 2 sur laquelle sont disposées côte à côte, mais séparées, deux bandes de matériau de protection 3 alimentées par deux dérouleurs 4.

Dans le même temps que les bandes de matériau de protection 3 on alimente le ruban 1 qui vient s'appuyer sur celles-ci avec ses deux bandes à grille 1a et 1b.

Au niveau de la machine à enduire 5 les deux bandes à grille sont ensuite remplies de matière active sous forme de pâte et successivement recouvertes avec deux autres bandes de matériau de protection 6, disposées côte à côte mais séparées, alimentées par deux autres enrouleurs 7. Le ruban composite qui en résulte est ensuite compacté au moyen de deux rouleaux 8 et 9 par lesquels il est également entraîné hors de la machine, où il est disponible sous forme de ruban continu, enduit, protégé et compacté, avec une bande intermédiaire 1c libre.

Le ruban 1' ainsi obtenu est ensuite introduit dans le four à rouleaux B pour y subir un séchage superficiel dans le but d'obtenir une certaine consistance extérieure qui puisse rendre possible les traitements successifs.

En utilisant un four à rouleaux, et avec l'emploi desdites couches de protection, le séchage superficiel selon l'invention peut avantageusement avoir lieu à une température peu élevée (rouleaux à 100 + 200°C) et par conséquent avec une appréciable économie d'énergie. On a d'autre part l'avantage d'éviter le dégagement de gaz polluants et de ne nécessiter que des espaces réduits, étant donné que l'encombrement axial de ce type de four est très limité (2-3 mètres, alors que les fours à gaz brûlés peuvent atteindre une longueur de 15 mètres et plus).

Dans le cas de plaques négatives ou non soumises à des cycles de décharge profonds, le traitement avec le four à rouleau peut tout aussi bien être omis : en effet, les couches de protection peuvent, toutes seules, bien qu'encore mouillées, empêcher l'adhérence réciproque des surfaces contiguës des plaques.

Après le séchage, le ruban passe dans la machine C constituée par une cisaille rotative en mesure de découper les plaques 10 sur les bandes latérales 1a et 1b et les pattes 10' de chaque plaque sur la bande intermédiaire 1c.

Conformément à l'invention, les plaques ainsi obtenues sont ensuite introduites dans une chambre de conditionnement dans laquelle elles subissent un traitement thermique contrôlé de manière à obtenir des plaques présentant les caractéristiques chimiques et physiques désirées.

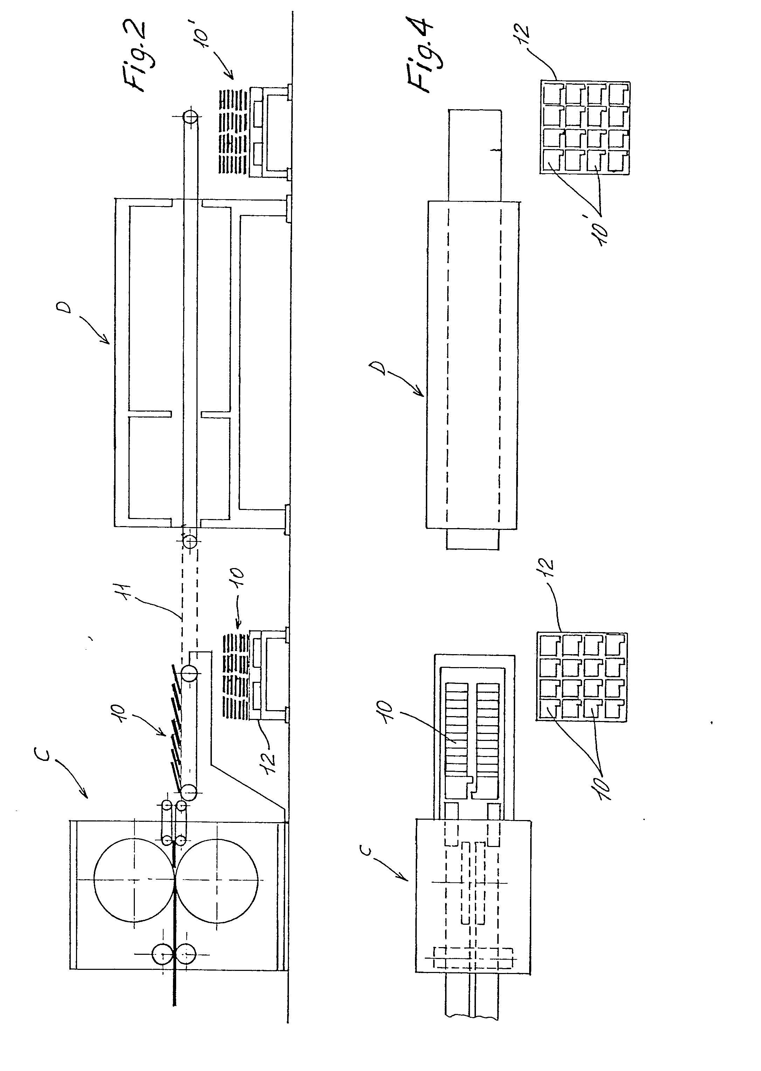

Le conditionnement peut avoir lieu dans un four à transit 2, comme indiqué sur la figure 2, dans lequel les plaques, prélevées à la sortie de la cisaille C, sont introduites au moyen d'une bande transporteuse continue 11 ou bien au moyen de bancs d'empilage 12. Le four pourra tout aussi bien être du type à chambre, à pression ambiante, dans lequel les plaques sont destinées à séjourner pendant un certain temps. Quel que soit le type de four à pression ambiante, la température devra de préférence être maintenue dans une plage comprise entre 70 et 100°C et l'humidité relative dans une plage comprise entre 90 et 100%. En alternative, lorsqu'on exige un conditionnement plus précis des plaques, le traitement thermique pourra être effectué dans un autoclave, non représenté.

Dans ce cas, la température de service devra de préférence être comprise entre 100 et 120°C dans un milieu de vapeur saturée. Que ce soit dans le four ou dans l'autoclave, les plaques sont conditionnées chimiquement et physiquement de manière à obtenir une réduction du plomb libre et une génération contrôlée de sulfates de plomb polybasiques, en particulier du sulfate de plomb tétrabasique, qui assurent, après leur formation, la cohésion des cristaux de bioxyde de plomb et la structure de l'interface grille-matière active.

En contrôlant convenablement la température, l'humidité et la durée du transit ou du séjour dans le four, ou bien la durée du séjour, l'humidité, la pression et la température dans l'autoclave, on parvient à obtenir des plaques avec des caractéristiques prédéterminées et réalisées avec une dispersion minimale des valeurs. Ainsi, par exemple, le conditionnement pourra avoir lieu dans un four pour obtenir des plaques négatives destinées à des batteries de démarrage, ou bien en autoclave s'il s'agit de plaques positives soumises à des cycles profonds de chargement ou de déchargement comme celles destinées aux batteries industrielles (batteries de traction ou stationnaires). L'utilisation d'un autoclave permet, grâce à la possibilité de bien régler la température même à des valeurs élevées, d'augmenter la vitesse de réaction et par conséquent également le processus de formation et de cristallisation de quantités bien définies de sulfates polybasiques qui déterminent les caractéristiques particulières des plaques.

Comme on l'a vu précédemment, la vitesse des réactions dépend également de la teneur en humidité du ruban lorsqu'il est introduit dans l'autoclave ou dans le four. Cette valeur, pour être optimale, doit tourner autour de 10%, ce qui est obtenu avec sûreté au cours de la phase de séchage superficiel dans le four à rouleaux. Selon l'invention, lorsque des exigences particulières l'exigent, comme dans le cas des plaques positives, les couches de protection 3 et 6 appliquées sur le ruban enduit 1 sont constituées par une bande poreuse d'un matériau perméable à l'électrolyte, doté d'une faible résistance chimique et résistant à l'oxydation électrochimique en milieu acide. On pourra utiliser à cet effet, car très appropriés, des rubans de tissu ou de non-tissé ou feutre en matière plastique, telle que par exemple du polyester, de la fibre de verre, etc... Grâce à l'emploi de ces rubans non désintégrables dans l'acide on évite la pollution de l'électrolyte et de ce fait la corrosion des plaques au grand bénéfice de leur longévité.

Selon un autre aspect de l'invention, à sa sortie de la machine A le ruban 1' protégé par une couche de cellulose ou bien de matière plastique non désintégrable, au lieu de subir les traitements décrits précédemment, pourra être enroulé en bobines comme indiqué avec 13 sur la figure 3. Dans ce cas, les opérations de conditionnement thermique, de stockage et d'expédition du ruban enduit et protégé s'en trouvent grandement facilitées. Le ruban est enroulé en bobines immédiatement après l'opération d'enduction et, étant donné sa conformation, il conserve l'humidité nécessaire pour le processus de conditionnement successif en atmosphère contrôlée. Ce conditionnement pourra avoir lieu en autoclave, avec l'avantage supplémentaire de pouvoir exploiter la forme en bobine qui est la plus appropriée pour une utilisation maximale de l'espace intérieur de l'autoclave.

Revendications de brevet

1. Procédé de production en continu de plaques pour batteries d'accumulateurs au plomb à partir d'un ruban continu en alliage de plomb grillagé, enduit de matière active, recouvert sur ses deux côtés par des couches de matériau de protection (3, 6) et compacté par roulage, caractérisé par le fait que ledit ruban (1') ainsi obtenu est ensuite découpé en plaques (10), lesquelles sont ensuite soumises à un processus thermique de conditionnement (stabilisation) en atmosphère contrôlée qui leur confère les caractéristiques chimiques et physiques désirées en fonction de leur utilisation finale.

2. Procédé de production en continu de plaques pour batteries selon la revendication 1, caractérisé par le fait qu'avant le découpage le ruban est soumis à une opération de séchage superficiel.

3. Procédé de production en continu de plaques pour batteries selon la revendication 2, caractérisé par le fait que l'opération de séchage superficiel du ruban compacté est effectuée dans un four à rouleaux (B).

4. Procédé de production en continu de plaques pour batteries selon l'une quelconque des revendications 1 à 3, caractérisé par le fait que le processus de conditionnement des plaques a lieu dans une chambre à pression ambiante, à température et humidité contrôlées, de préférence entre 70 et 100°C et entre 90 et 100% d'humidité relative.

5. Procédé de production en continu de plaques pour batteries selon l'une quelconque des revendications 1 à 3, caractérisé par le fait que le processus de conditionnement des plaques a lieu dans un autoclave à pression, température et humidité contrôlées, de préférence entre 100 et 120°C, et dans un milieu de vapeur saturée.

6. Procédé de production en continu de plaques pour batteries selon l'une quelconque des revendications précédentes, caractérisé par le fait que les couches de protection du ruban enduit sont constituées, tout au moins en ce qui concerne les plaques positives, par une bande poreuse de tissu ou de non-tissé en matière plastique résistante à l'oxydation électrochimique en milieu acide.

7. Procédé de production en continu de plaques pour batteries selon la revendication 6, caractérisé par le fait que les bandes de protection sont en polyester.

8. Procédé de production en continu de plaques pour batteries d'accumulateurs à partir d'un ruban continu en alliage de plomb grillagé, enduit de matière active, recouvert sur ses deux côtés par des couches de matériau de protection et compacté par roulage, caractérisé par le fait que ledit ruban est enroulé en bobines (13), qui sont ensuite soumises à un processus thermique de conditionnement en atmosphère contrôlée (dans un four ou dans un autoclave), selon l'une des revendications 4 et 5, avant le découpage des plaques.

9. Batteries d'accumulateurs dotées de plaques (ou électrodes) obtenues par le procédé selon les revendications précédentes.

0029788

Fig.1

Fig.3

Fig.2

Fig.4

# 0029788

Office européen
des brevets

## RAPPORT DE RECHERCHE EUROPEENNE

Numéro de la demande

EP 80 40 1674

| Catégorie | Citation du document avec indication, en cas de besoin, des parties pertinentes | Revendication concernée |
|---|---|---|
| X | US - A - 3 758 340 (M.E. ADAMS)<br>* Figure 1, colonne 2, ligne 35 - colonne 3, ligne 2; revendication 2 * | 1,2,8, 9 |
| | -- | |
| | DE - A - 2 746 467 (NIGGL HANS)<br>* Page 12, dernier paragraphe - page 14, ligne 4; figure 8 * | 6,7 |
| | -- | |
| | DE - A - 2 034 913 (GAMILLSCHEG)<br>* Revendication 1; figures * | 3 |
| | -- | |
| | US - A - 2 481 218 (A.L. HINDALL)<br>* Revendication 2 * | 4 |
| | -- | |
| | US - A - 2 062 193 (E.W. SMITH)<br>* Revendication 1; page 2, colonne de gauche, lignes 53-56 * | 4 |
| | -- | |
| | US - A - 2 553 192 (W.J. PLEWS)<br>* Revendication 1; colonne 2, lignes 2-28 * | 5 |
| | -- | |
| | US - A - 2 971 043 (D.G. TOWNSEND)<br>* Revendication 1; colonne 1, lignes 37-42 * | 5 |
| | --<br>./. | |

**DOCUMENTS CONSIDERES COMME PERTINENTS**

**CLASSEMENT DE LA DEMANDE (Int. Cl. 3)**

H 01 M 4/21

**DOMAINES TECHNIQUES RECHERCHES (Int. Cl. 3)**

H 01 M 4/21
4/20
4/16
4/23

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-03-1981 | D'HONDT |

OEB Form 1503.1  06.78

**Office européen**
**des brevets**

## RAPPORT DE RECHERCHE EUROPEENNE

| Catégorie | Citation du document avec indication, en cas de besoin, des parties pertinentes | Revendication concernée |
|---|---|---|
| | JOURNAL OF THE ELECTROCHEMICAL SOCIETY, 69-20, (1936), pages 229-238 E.G. MARSHALL: "The setting and drying of freshly pasted lead storage battery plates"<br><br>* Résumé; page 229, page 231, paragraphe 3 * | 5 |
| A | US - A - 3 621 543 (N.L. WILLMANN)<br><br>* Revendications 1 et 3; figure 1 * | 8 |
| A | US - A - 1 670 047 (W.J. PLEWS)<br><br>* Revendications 4-5 * | 5 |
| A | US - A - 1 500 076 (W.E. HOLLAND)<br><br>* Revendications 1,8; page 1, lignes 85-95 * | |

**DOCUMENTS CONSIDERES COMME PERTINENTS**

CLASSEMENT DE LA DEMANDE (Int. Cl. 3)

DOMAINES TECHNIQUES RECHERCHES (Int. Cl. 3)